(19) Europäisches Patentamt
European Patent Office
Office européen des brevets

(11) EP 2 880 473 B1

(12) EUROPEAN PATENT SPECIFICATION

(45) Date of publication and mention of the grant of the patent:
**14.09.2016 Bulletin 2016/37**

(21) Application number: **13739399.7**

(22) Date of filing: **15.07.2013**

(51) Int Cl.:
***G02B 1/04*** (2006.01) ***G02B 1/10*** (2006.01)

(86) International application number:
**PCT/EP2013/064933**

(87) International publication number:
**WO 2014/019843 (06.02.2014 Gazette 2014/06)**

# (54) OPTICAL ARTICLE CONTAINING A SELF-HEALING COATING AND IMPROVED INITIAL HAZE

OPTISCHER ARTIKEL MIT EINER SELBSTREPARIERENDEN BESCHICHTUNG UND VERBESSERTER ANFÄNGLICHER TRÜBUNG

ARTICLE OPTIQUE CONTENANT UN REVÊTEMENT AUTORÉPARANT ET PRÉSENTANT UNE BRUME INITIALE AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2012 US 201213564884**

(43) Date of publication of application:
**10.06.2015 Bulletin 2015/24**

(73) Proprietor: **Essilor International (Compagnie Générale d'Optique)**
**94220 Charenton-le-Pont (FR)**

(72) Inventors:
- **ZHENG, Haipeng**
  **Carrollton, Texas 75006 (US)**
- **HAZLE, Joshua**
  **Largo, Florida 33771 (US)**

(74) Representative: **Cabinet Plasseraud**
**66, rue de la Chaussée d'Antin**
**75440 Paris Cedex 09 (FR)**

(56) References cited:
**JP-A- 2007 223 126**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention is drawn to an optical article comprising: (a) a polycarbonate substrate, (b) a non-tintable intermediate coating, and (c) a transparent self-healing outer coating obtained by drying and curing a composition comprising at least one polycarbonate polyol, at least one polyisocyanate, at least one solvent and at least one surfactant.

The development of optical elements, including ophthalmic lenses, manufactured from organic glass has required the development of technical solutions to improve their scratch resistance, because organic glass is known to be more sensitive to scratching and abrasion than conventional mineral glass. One of these solutions consists in protecting the organic glass by applying a thermally or photochemically hardenable composition to the surface of the glass to produce an abrasion-resistant coating. Another rather new and very interesting route for solving the problem of scratches and/or abrasion of organic glasses such as polycarbonate is to protect the optical article with coating layers able to repair themselves, i.e. coatings which would be able, when submitted to a simple physical treatment, to revert completely or partially to the initial non-scratched condition. Examples of such self-healing coatings have been disclosed by PPG INDUSTRIES in US 2009/062453 and are currently marketed by them (Revivance® and Resilience®). They are mainly prepared from polyurethanes, which show healing effects after thermal or humidity treatments.

Although this solution is promising to improve the scratch- and abrasion-resistance of organic glasses, the inventors have discovered that organic glasses made of polycarbonate seemed to be attacked by the surfactants (polyether-modified polysiloxanes) and/or solvents (of the glycol ether type) present in the solution used for preparing these self-healing coatings, which resulted in a high initial haze of the lens, which was inacceptable for ophthalmic products. Attempts were thus made to change these surfactants and solvents with different compounds, but the resulting lenses still presented too high haze for ophthalmic applications, or too much variation of the haze value due to the age of the coating solution. Therefore, there still remains a need for optical articles provided with self-healing coatings obtained from the compositions available on the market, while having low initial haze and consistent values of haze, whatever the age of the self-healing coating. The inventors have now found that this need could be satisfied by interposing a non-tintable coating between the polycarbonate substrate and the self-healing coating.

The present invention is therefore drawn to an optical article comprising:

(a) a polycarbonate substrate,

(b) an intermediate coating which, when applied onto a substrate consisting of a polymer of diethylene glycol bis(allyl carbonate), known as CR-39, to form a coated substrate and then subjected to a tintability test, provides for a transmittance value of at least 60%,
wherein the tintability test consists in dipping the coated substrate in a black dye solution at 96°C and under atmospheric pressure, for time that is sufficient to obtain a transmittance value of 20% with a sample of same uncoated substrate under the same conditions, and

(c) a transparent self-healing outer coating obtained by drying and curing a composition comprising at least one polycarbonate polyol, at least one polyisocyanate, at least one solvent and at least one surfactant.

In this description, the expression "outer coating" refers to a self-healing coating located above the intermediate coating, on the other side thereof relative to the substrate, but does not exclude that other intermediate coatings may be present between the self-healing and intermediate coatings, or that other outer coatings may be present on top of the self-healing coating.

Moreover, the expression "comprised between" used in connection with a range of values should be understood as including the specific upper and lower values of this range.

The inventors have demonstrated that the inclusion of the above-mentioned intermediate coating allowed obtaining an optical article provided with the claimed type of self-healing coating, while having low initial haze, namely of at most 1%, preferably of at most 0.3%, such as between 0.1 and 0.3%, and good dry adhesion of the self-healing layer, as measured with the Q-Sun test at 0h and 80h.

In this description, haze values are measured with a Haze Guard XL 211+ haze meter from BYK-GARDNER (a color difference meter) according to the method of ASTM D1003-00. To perform this measure, the instrument is first calibrated according to the manufacturer's instructions, then the specimen (coated or bare lens) is placed on the transmission light beam of the instrument. The haze value is an average of the haze values of three different specimens.

The adhesion of the self-healing coating is evaluated by means of a crosshatch adhesion test (ISTM 02-010) which is performed on the lens in various conditions:

- without specific conditioning of the lens (test called "dry adhesion")
- after having submitted the lenses to UV ageing for 80h.

UV ageing is performed in a xenon test chamber Q-SUN® Xe-3 from Q-LAB at a relative humidity of 20% (± 5%) and

at a temperature of 23°C (± 5°C). The lens is introduced in the chamber and the convex side is exposed to the light. The lens is exposed to UV during 80h and then subjected to the crosshatch test. According to crosshatch test ISTM 02-010, a mark from 0 to 5 is given to the lens. With mark 0 or 1, the lens is acceptable (passes), whereas marks 2 to 5 are not acceptable (does not pass).

The intermediate coating may be selected by performing a tintability test as claimed. This test specifically consists in the following steps. The coating to be assessed is first applied by dip coating onto a substrate made of a polymer of diethyleneglycol bis(allyl carbonate), commonly known as CR-39. The coated substrate is then preferably cleaned by wiping with a compatible solvent. Simultaneously, a reference sample of bare CR-39 substrate is immersed in a black dye bath (which may be obtained by diluting a concentrated dye solution, such as BPI dye solution ref.46300 sold by BRAIN POWER INC, in water) at 96°C and atmospheric pressure for sufficient time to obtain a light transmittance value of 20%, as defined in the standard ISO 13666:1998 and measured according to the standard ISO 8980-3 with a wavelength between 380 to 780 nm, using a Haze Guard XL 211+ from BYK-GARDNER. The bare substrate is preferably washed with distilled water to remove the excess dye and then dried with blown air before measuring its transmittance value. If this value has not decreased to 20%, then the previous steps are repeated until this 20% value is reached. The time required for reaching 20% transmittance may vary with the dilution of the dye in the bath and with the agitation of the bath. It is preferred to dilute one part of BPI concentrated dye solution with ten parts of water. Generally, CR-39 substrates should reach 20% transmittance in about 10-15 minutes. The coated substrate is then immersed in the same bath for the same time, preferably washed with distilled water and dried with blow air, and its transmittance value is thus measured in the same way as above. According to this invention, the intermediate coating should have a transmittance value of at least 60%, preferably of at least 70%, more preferably of at least 80% and still more preferably of at least 85%. Such coatings are regarded as non-tintable.

The optical substrate may be any organic glass based on polycarbonate commonly known and used in the optical field. It is preferably a thermoplastic polycarbonate derived from bisphenol A, although it may alternatively be derived from other diols such as 1,1-bis(4-hydroxyphenyl)cyclohexane, dihydroxybenzophenone and tetramethylcyclobutanediol. It should be noted that, in the context of this description, polymers obtained by polymerization of allyl carbonates of linear or branched aliphatic or aromatic polyols such as CR-39 are not included within the definition of "polycarbonate". Examples of polycarbonates and their preparation process are given in US 3 305 520 for instance.

The substrate may be subjected, before applying the intermediate coating of this invention, to a surface treatment generally intended to improve the adhesion, such as a physical treatment, for instance by plasma jet (preferably in oxygen) or corona discharge, or to a chemical treatment, typically with a base such as sodium hydroxide, preferably in solution with water, normally at about 10%w/w concentration. It is preferred that the treatment with a base is followed by washing with water.

According to a first aspect of this invention, the substrate is coated with an intermediate coating which is an impact-resistant coating, known as primer coating. It is preferably a primer layer based on polyurethane. Such a primer layer is well-known to the skilled artisan and has been used for improving the impact resistance of optical articles for other substrates than polycarbonate (PC) and especially for optical articles that do not use a self-healing layer. Such a primer layer is generally not used on PC based lenses, as the PC substrate passes all impact resistance tests without a primer layer. The primer layer may be prepared from an aqueous colloidal polyurethane dispersion, which has preferably a pH in the range of 7 to 9 and a solid content ranging from 5% to 40%. Its average particle size may be in the range from 10 to 100 nm. The dispersion colloids may contain polyurethane or polyurethane-polyurea, i.e. a polymer formed by polyaddition reactions between polyisocyanates and polyols, leading to polyurethane segments, and optionally also between polyisocyanates and polyamines, leading to polyurea segments. Preferably, the polyisocyanate is reacted both with a polyol, such as polyesters diols, polyether diols and polycarbonate polyols, e.g. hexanediol, and with an anionic diol, such as dimethylolpropionic acid. Preferred isocyanates include isophorone diisocyanate, dicyclohexylmethane diisocyanate, hexamethylene diisocyanate and tetramethylxylene diisocyanate or 1-1' methylenebis(4-cyanatocyclohexane). A preferred primer is Witcobond W-234 supplied by CHEMTURA. Another possible primer may be made of W240 supplied by CHEMTURA. A method for applying the primer onto the substrate is given for instance in Example 1 of US-5,316,791. Specifically, the primer may be applied onto the substrate and then allowed to cure by air drying at ambient temperature for about 15 minutes. The coating step may be performed by any means known to the skilled artisan, for instance dip-coating, bar coating, spray coating, or spin coating. Spin coating is most preferred. The thickness of the primer coating generally ranges from 0.1μm to less than 5 μm, for instance from 0.5 to 2 μm.

According to a second aspect of this invention, the substrate is coated with an intermediate coating which contains aminoalkyl alkoxysilane (sometimes referred to herein as "aminosilane"). This aminoalkyl alkoxysilane may include one to three alkoxy groups and three to one aminoalkyl groups, respectively, wherein the alkoxy groups may be identical or different from each other, preferably identical, and the aminoalkyl groups may also be identical or different from each other, preferably different. These aminoalkyl alkoxysilanes may be selected from the group consisting of 3-amino-propyltrimethoxysilane (APTMS), 3-aminopropyltriethoxysilane (APTES), N-(2-aminoethyl) 3-aminopropyltrimethoxysilane, N-(2-aminoethyl)-3-aminopropyl-triethoxysilane, N-(2-aminoethyl)-3-aminopropylmethyldimethoxysilane, N-(2-amino-ethyl)-3-aminopropylmethyldiethoxysilane, N,N-di(2-aminoethyl)-3-amino-propyl-trimethoxysilane, N,N-di(2-aminoethyl)-3-aminopropyltriethoxysilane, N-[N'-(2-aminoethyl)-2-aminoethyl)]-3-aminopropyltrimethoxysilane, N-[N'-(2-aminoethyl)-2-aminoethyl)]-3-aminopropyltriethoxysilane, N-methyl-3-aminopropyltrimethoxysilane, N-methyl-3-aminopropyltriethoxysilane, N-(n-butyl)-3-aminopropyltrimethoxysilane, N-(n-butyl)-3-amino-propyltriethoxysilane, N-cyclohexyl-3-aminopropyltrimethoxysilane, N-cyclohexyl-3-aminopropyltriethoxysilane, N-phenyl-3-aminopropyltrimethoxysilane, 3-aminopropylmethyldimethoxysilane, 3-aminopropylmethyl-diethoxysilane (APDEMS), 3-aminopropyldimethylethoxysilane (APDMES), bis(3-trimethoxysilylpropyl)amine, and bis(3-triethoxysilylpropyl) amine, preferably 3-aminopropyl triethoxysilane.

This aminosilane coating may be applied to the substrate by any means known to the skilled artisan, for instance dip-coating, bar coating, spray coating, or spin coating. Spin coating is most preferred. This coating generally has a thickness ranging from 0.03 $\mu$m to less than 0.5 $\mu$m, for instance from 0.05 $\mu$m to 0.2 $\mu$m.

In the case of the intermediate coating comprising aminoalkyl alkoxysilane, it is preferable to further include, in the optical article of this invention, an abrasion-resistant coating interposed between the intermediate coating and the outer coating, in order to maintain the low initial haze of the optical article even when the aged composition of the self-healing coating to be applied thereon. It has indeed been observed that some elements contained in said composition tended to deteriorate both the initial haze of the lens and the adhesion of the self-healing coating after a few days of storage at room temperature before the composition was applied onto the substrates.

The abrasion-resistant coating is obtained by curing a solution prepared by a sol-gel process from at least one epoxysilane. Examples of epoxysilanes which may be used are those of formula (I):

$$(R^1O)_{3-n}Si(R^3)_n\text{-}W \qquad \text{(I)}$$

wherein:

- $R^1$ is an alkyl group with 1 to 6 carbon atoms, preferably a methyl or ethyl group, an acetyl group, or a hydrogen atom, more preferably an ethyl group,
- $R^3$ is a non-hydrolyzable group, such as an alkyl group having from 1 to 6 carbon atoms, preferably a methyl group,
- n is 0 or 1, preferably n = 1,
- W is an organic group containing at least one epoxy group, such as a $-(CH_2)_m$-Y group, wherein m ranges from 1 to 6 and is preferably 3, and Y is:

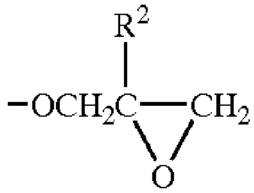

(II)

wherein $R^2$ is a methyl group or a hydrogen atom, preferably a hydrogen atom.

The following are examples of such epoxysilanes: $\gamma$-glycidoxypropyl trimethoxysilane, $\gamma$-glycidoxypropyltriethoxysilane and $\gamma$-glycidoxypropyl methyldiethoxysilane. Preferably, $\gamma$-glycidoxypropyl trimethoxysilane (GLYMO) and/or $\gamma$-glycidoxypropyl methyldiethoxysilane (Methyl GLYMO) are used in this invention.

The epoxysilane may be combined with a second epoxysilane and/or at least one alkoxysilane which does not contain any reactive functional group but optionally contains at least one non-hydrolyzable organic group, the purpose of which is generally to reduce the rigidity of the final coating obtained and to increase the shock resistance of the corresponding coated lens, while maintaining good abrasion resistance. This constituent may have formula (III):

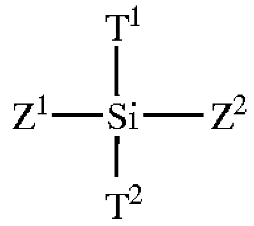

(III)

wherein each of the two groups $T^1$ and $T^2$ bonded to the silicon may be hydrolyzed to a hydroxy group and are independently selected from alkoxy groups with 1 to 10 carbon atoms, and $Z^1$ and $Z^2$ are selected independently of each other from alkoxy groups with 1 to 10 carbon atoms, alkyl groups with 6 to 10 carbon atoms and aryl groups with 6 to 10 carbon atoms, such as a phenyl group. Examples of alkoxysilanes of formula (III) are: dimethyldimethoxysilane, dimethyldiethoxysilane (DMDES), methylphenyldimethoxysilane and tetraethylorthosilicate (TEOS), wherein TEOS is preferred.

The epoxysilane and the above alkoxysilane, if present, are usually hydrolyzed so as to produce the abrasion-resistant coating, using known sol-gel processes. The techniques described in U.S. Pat. No. 4,211,823 can be employed. It is possible, for example, to mix the alkoxysilane (if present) and epoxysilane and then hydrolyze the mixture. It is preferable to use a stoichiometric amount of water for the hydrolysis, i.e. a molar quantity of water which corresponds to the number of moles of the alkoxy groups which can produce silanols. Hydrolysis catalysts such as hydrochloric acid, sulphuric acid, phosphoric acid, nitric acid and acetic acid may be employed.

The epoxysilane may also be combined with a colloidal inorganic binder.

The colloidal inorganic binder may be added before or after hydrolysis, and may be chosen from metal oxides or preferably colloidal silica, i.e. fine particles of silica with a diameter of preferably less than 50 nm, for instance between 5 and 40 nm, in dispersion in a solvent, preferably an alcohol type solvent or alternatively water. An example of such colloidal silica is Nissan Sun Colloid Mast® which contains 30% of solid $SiO_2$ in suspension in methanol, or Eka Chemicals' Nyacol® 2034 DI.

Hydrolyzates may then condense spontaneously, optionally in the presence of the catalyst which may be chosen from the aforesaid acids or from metal halides, chelated compounds of acetylacetone and acetoacetate, carboxyl compounds of various metals (magnesium, titanium, zirconium tin...) and perchlorates. Preferably, the catalyst is aluminium chelate, i.e. a compound formed by reacting aluminium alcoholate or acylate with nitrogen- and sulphur-free sequestrating agents which contain oxygen as the coordinating atom. The aluminium chelate is preferably selected from compounds having formula (IV):

$AlX_vY_{3-v}$ (IV)

wherein X is an OL group where L is an alkyl group with 1 to 10 carbon atoms, Y is at least one coordinating product obtained from a compound having formula $M^1COCH_2COM^2$ or $M^3COCH_2COOM^4$, wherein $M^1$ , $M^2$, $M^3$ and $M^4$ are alkyl groups with 1 to 10 carbon atoms, and v takes the value 0, 1 or 2. Examples of compounds having formula (IV) are aluminium acetylacetonate, aluminium ethyl-acetoacetate bisacetylacetonate, aluminium bisethyl-acetoacetate acetylacetonate, aluminium di-n-butoxide monoethylacetoacetate and aluminium diisopropoxide monomethyl acetoacetate.

Alternatively, the catalyst may be a compound of formula (V) or (VI):

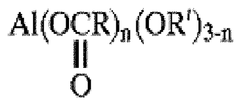

(V)

$(R'O)_{3-n}Al(OSiR''_3)_n$ (VI)

wherein R and R' are linear or branched alkyl groups with 1 to 10 carbon atoms, R" is a linear or branched alkyl group with 1 to 10 carbon atoms, a phenyl group or a -OCOR group where R has the meaning given above, and n is an integer from 1 to 3.

Preferred compounds having formula (V) or (VI) are those where R' is an isopropyl or ethyl group and R and R" are methyl groups. One or more compounds having formula (IV), (V) or (VI) can be used as a catalyst.

The catalyst is used in proportions which will harden the mixture over a period of a few hours at temperatures in the order of 100°C. It is generally used in a proportion of 0.1% to 5% by weight of the abrasion-resistant composition. When the catalyst is an aluminium chelate, the composition preferably further comprises an organic solvent whose boiling point $T_b$ at atmospheric pressure is between 70°C and 140°C. Ethanol, isopropanol, ethyl acetate, methylethylketone or tetrahydropyrane can be used for this purpose.

It is preferred that the intermediate abrasion-resistant coating is obtained by curing a composition prepared by a sol-gel process from a mixture which comprises: (a) at least one epoxysilane, (b) optionally, at least one alkoxysilane which does not contain any reactive functional group but optionally contains at least one non-hydrolyzable organic group, (c) preferably, a colloidal inorganic binder, and (d) optionally, a catalyst.

Moreover, the mixture used to prepare the abrasion-resistant coating can comprise other organic solvents, preferably alcohol type solvents such as methanol, which serve to adjust the viscosity of the composition.

Furthermore, this mixture can also include various additives, such as surfactants or wetting agents to improve spreading of the composition over the surface to be coated, UV absorbers, dye agents and/or pigments. Specific examples of mixtures used to prepare the abrasion-resistant coating may be found in US 2005/0123771.

The abrasion-resistant coating may be applied to the underlying coating by any means known to the skilled artisan, for instance dip-coating, bar coating, spray coating, or spin coating. Spin coating is most preferred. The abrasion-resistant coating may be thermally hardened at a temperature ranging from 60°C to 200°C, for instance between 80°C and 150°C, for a period between 30 min and 3 hours. Its thickness generally ranges from 1 to 10 μm, for instance from 3 to 5 μm.

In any case, the optical article of this invention further includes a self-healing coating formed from a composition comprising at least one polycarbonate polyol, at least one polyisocyanate, at least one solvent and at least one surfactant.

The polycarbonate polyol is a (preferably saturated) oligomer or a polymer or a mixture thereof, having at least two hydroxyl functions on each end of its main chain and which comprises at least one carbonate function per monomer unit. An example includes poly(hexamethylenecarbonate) glycol.

The polyisocyanate may be linear aliphatic polyisocyanate, cycloaliphatic polyisocyanate or arylalkyl or alkylaryl polyisocyanate. The saturated polyisocyanate is preferred in this invention. Specific examples include hexylene diisocyanate (HDI), octamethylene diisocyanate, decamethylene diisocyanate, 2,2,4- or 2,4,4-trimethyl hexamethylene diisocyanate, dodecane diisocyanate, 1,4-diisocyanobutane, 4,4'-diisocyanatocyclohexylmethane (HDMI), methylcyclohexylene diisocyanate (HTDI), isophorone diisocyanate (IPDI), 1,6-diisocyanatohexane (HDI), 1,3- and 1,4-bisisocyanatomethylcyclohexane, their dimers and trimers, such as uretdiones of HDI and/or IPDI and HDI biuret, and mixtures thereof. The polyisocyanate may comprise blocked isocyanate groups. Suitable blocking agents may be selected from alcohols such as methanol, lactams such as caprolactam, oximes such as acetone oxime, diisopropylamine, 1,2,4-triazole, imidazole, diethyl malonate, ethyl acetoacetate, pyrazoles such as 3,5-dimethylpyrazole, N-tert-butylbenzylamine, cyclopentanone and their mixtures.

The solvent may be chosen from the glycol ether type, i.e. from alkyl ethers of glycols, their esters, and mixtures thereof, including propylene glycol methyl ether acetate (Dowanol® PMA of DOW). The solvent may represent from 20 wt. % to 70 wt. % of the weight of the composition used to form the self-healing coating. The surfactant may be chosen from polyether-modified siloxanes (especially polydimethylsiloxanes), used alone or in a solvent, such as those marketed by BYK. The surfactant may represent from 0.05 wt.% to 1.0 wt.%, preferably from 0.1 wt.% to 0.3 wt.%, of the weight of the composition used to form the self-healing coating.

The self-healing coating may have a storage modulus smaller than 1500 MPa at 23°C and/or a glass transition temperature comprised in the range from 20°C to 70°C. Its thickness generally ranges from 3 μm to 15 μm, for instance from 8 to 14 μm.

Due to the self-healing coating, scratches can be suppressed from the optical article according to the present invention, either at room temperature or preferably by dipping the optical article with the cured and scratched self-healing coating into water brought to a temperature of 50-60°C for 1 to 60 minutes, preferably from 10 to 30 minutes, for instance for about 15 minutes.

If needed, other coatings may be included within the optical articles of this invention. For instance, an abrasion-resistant coating may be interposed between the primer and the self-healing coating.

Preferably, the optical article is a lens, such as an ophthalmic lens, sunglass lens or other optical lens, and most preferably an ophthalmic lens. In addition to the aforesaid coatings, it may contain functional layers such as polarizing layers, anti-reflective coatings, visible light and UV absorbing coatings, photochromic coatings, all of which are familiar to the skilled person.

This invention will be better understood in light of the following examples which are given for illustration purposes only and do not intend to restrict in any way the scope of the appended claims.

## EXAMPLES

### Example 1: Ophthalmic lens with polyurethane primer as an intermediate coating

A polycarbonate substrate was tested as a bare lens and then after coating: on both sides with a polyurethane latex primer based on a diluted solution of Witcobond W234 from Chemtura. The substrate was cleaned in a caustic solution with 10 wt. % of NaOH. The primer coating was applied by dip coating, with a withdrawal speed of 2.2 mm/s, up to a thickness of about 1 μm, and pre-cured at 75°C for 15 min. The bare lens and coated lens were each coated on both sides with a self-healing coating (hereafter designated as "SHC") obtained from a composition comprising a polycarbonate polyol, a polycarbonate diol, a blocked polyisocyanate, a solvent of the glycol ether type and a surfactant made of a solution of polyether-modified polysiloxane. The concentration of the self-healing composition was diluted to about 40% of solid content.

The self-healing coating was applied by dip coating too, with a withdrawal speed of 2.2 mm/s, up to a thickness of 12 ± 1 μm. It was pre-cured at 120°C for 15 min. Post curing of the optical articles was carried out at 120°C for 3 hours after removal of lens holders from the lenses.

An automated steel wool (ASW) test was conducted on both lenses thus obtained. To this end, initial haze ($Haze_0$) of a given lens was measured by a Haze-Gard XL 211+ using the standard method ASTM D 1003-00. The convex side of the lens was then rubbed with steel wool (000 grade) for 5 cycles (1 cycle = 1 forward and 1 backward motion) under 5000 grams forward and 2500 grams backward of load using an automated steel wool machine. The haze of the scratched lens (Hazes) was then measured under the same conditions as the initial haze. The scratches made by this method were analyzed by profilometer. The lenses submitted to the ASW test were subsequently immersed in warm water at 60 °C for 15 minutes and were taken out from the water to cool down at room temperature or dry with blow air. At the end, the haze of the lens after this healing process ($Haze_h$) was measured again.

The healing performance/level is calculated as following.

$$\text{Healing level (\%)} = \frac{Haze_s - Haze_h}{Haze_s} \text{ X } 100\ (\%)$$

The results of this experiment are summarized in the following Table 1:

Table 1: Healing performances

| Lens | $Haze_0$, % | $Haze_s$, % | $Haze_h$, % | Healing, % |
|---|---|---|---|---|
| PC + SHC | 2.84* | / | / | / |
| PC+ Primer + SHC | 0.21 | 6.65 | 3.28 | 51 |
| *Due to initial high haze, the healing performances were not evaluated. | | | | |

This table shows that the initial haze of the lens made from the substrate directly coated with the self-healing coating was too high for ophthalmic applications. On the contrary, the lens of this invention, which includes an intermediate polyurethane primer coating, has much lower initial haze while still providing self-healing properties. Furthermore, it was shown that the lens of this invention passed the Q-Sun test after 80h, thus demonstrating good adhesion of the self-healing coating.

### Example 2: Ophthalmic lens with aminosilane as an intermediate coating

A self-healing coating similar to that of Example 1 was applied directly by a spin coating process on both sides of a polycarbonate substrate treated with air plasma for 60 s. The self-healing composition differed from that used in Example 1 only by the commercial grade of polyether-modified polysiloxane solution used. It was also applied on both sides of the same substrate previously coated with a composition comprising 3-aminopropyl triethoxysilane either alone or further coated with an abrasion-resistant coating made from a composition comprising GLYMO, Methyl-GLYMO and colloidal silica, hereafter designated by "sol-gel coating (SGC)". Coating was performed in the same way as mentioned in Example 1. The abrasion-resistant coating had a thickness of about 4 μm, the aminosilane thickness was about 100 nm and the self-healing coating had a thickness of about 10 ± 1 μm.

The initial haze was measured on these three lenses as described in Example 1.

The results of this experiment are summarized in the following Table 2:

Table 2

| Lens | $Haze_0$, % |
|---|---|
| PC + SHC | 1.26 |
| PC+ Aminosilane + SHC | 0.2 |
| PC + Aminosilane + SGC + SHC | 0.19 |

From this table, it appears that the ophthalmic lens including an intermediate aminosilane coating has lower haze.

Moreover, experiments have been conducted, which also showed that this lens passed the Q-Sun test after 80h, contrary to the bare lens. This confirmed the good adhesion of the self-healing coating with this invention.

**Example 3: Effect of solution aging on the initial haze**

A polycarbonate substrate was first tested as a bare lens and then after coating on both sides with either the polyurethane primer of Example 1, or the aminosilane coating of Example 3, either alone or further coated with the abrasion-resistant coating of Example 2. Two samples of each of these four lenses were prepared. One of these samples was then coated with the self-healing composition of Example 2, which was prepared the day before ("fresh composition") and the other with the same composition prepared 11 days before ("aged composition") and stored at room temperature. The initial haze of all these samples was measured according to the method described in Example 1. The adhesion of the self-healing coating was also evaluated using the Q-Sun test described above.

The results of these experiments are given in Table 3 below.

Table 3

| Lens | Haze (%) | | Q-Sun test (80h) | |
|---|---|---|---|---|
| | Fresh composition | Aged composition | Fresh composition | Aged composition |
| PC + SHC | 1.26 | 2.13 | Failed | Failed |
| PC + Primer + SHC | 0.28 | 0.22 | Passed | Passed |
| PC + aminosilane + SHC | 0.2 | 3.48 | Passed | Failed |
| PC + aminosilane + SGC + SHC | 0.19 | 0.15 | Passed | Passed |

This table shows that, with aging, the composition of the self-healing coating tends to degrade both the initial haze of the lens and the adhesion of the self-healing coating, especially in the case of the aminosilane coating used, and that this effect can be prevented by adding a primer coating or by adding an abrasion-resistant coating above the aminosilane coating.

## Claims

**1.** An optical article comprising

(a) a polycarbonate substrate,
(b) an intermediate coating which, when applied onto a substrate consisting of a polymer of diethylene glycol bis(allyl carbonate), known as CR-39, to form a coated substrate and then subjected to a tintability test, provides for a transmittance value of at least 60%,
wherein the tintability test consists in dipping the coated substrate in a black dye solution at 96°C under atmospheric pressure for a time sufficient to obtain a transmittance value of 20% with a sample of same uncoated substrate under the same conditions, and
(c) a transparent self-healing outer coating obtained by drying and curing a composition comprising at least one polycarbonate polyol, at least one polyisocyanate, at least one solvent and at least one surfactant.

**2.** An optical article according to claim 1, **characterized in that** the intermediate coating is obtained from an aminoalkyl alkoxysilane, which may be selected from the group consisting of 3-amino-propyltrimethoxysilane (APTMS), 3-aminopropyltriethoxysilane (APTES), N-(2-aminoethyl) 3-aminopropyltrimethoxysilane, N-(2-aminoethyl)-3-aminopropyl-triethoxysilane, N-(2-aminoethyl)-3-aminopropylmethyldimethoxysilane, N-(2-amino-ethyl)-3-aminopropylmethyldiethoxysilane, N,N-di(2-aminoethyl)-3-amino-propyl-trimethoxysilane, N,N-di(2-aminoethyl)-3-aminopropyltriethoxysilane, N-[N'-(2-aminoethyl)-2-aminoethyl)]-3-aminopropyl-trimethoxysilane, N-[N'-(2-aminoethyl)-2-aminoethyl)]-3-aminopropyltriethoxysilane, N-methyl-3-aminopropyltrimethoxysilane, N-methyl-3-aminopropyltriethoxysilane, N-(n-butyl)-3-aminopropyltrimethoxysilane, N-(n-butyl)-3-amino-propyltriethoxysilane, N-cyclohexyl-3-aminopropyltrimethoxy-silane, N-cyclohexyl-3-aminopropyltriethoxysilane, N-phenyl-3-aminopropyl-trimethoxysilane, 3-aminopropylmethyldimethoxysilane, 3-aminopropylmethyl-diethoxysilane (APDEMS), 3-aminopropyldimethylethoxysilane (APDMES), bis(3-trimethoxysilylpropyl)amine, and bis(3-triethoxysilyl-propyl) amine, preferably 3-aminopropyl triethoxysilane.

3. An optical article according to claim 1 or claim 2, **characterized in that** it further includes an abrasion-resistant coating interposed between the intermediate coating and the outer coating, wherein said abrasion-resistant coating is obtained from at least one epoxysilane by a sol-gel process.

4. An optical article according to claim 3, **characterized in that** the intermediate abrasion-resistant coating is obtained by curing a composition prepared by a sol-gel process from a mixture which comprises: (a) at least one epoxysilane, (b) optionally, at least one alkoxysilane which does not contain any reactive functional group but optionally contains at least one non-hydrolyzable organic group, (c) preferably, a colloidal inorganic binder, and (d) optionally, a catalyst.

5. An optical article according to claim 1, **characterized in that** the intermediate coating is an impact-resistant coating, known as primer coating.

6. An optical article according to claim 5, **characterized in that** the primer coating is based on polyurethane.

7. The optical article according to any of claims 1 to 6, **characterized in that** the solvent is chosen from alkylethers of glycols, their esters and mixtures thereof.

8. The optical article according to any of claims 1 to 7, **characterized in that** the surfactant is chosen from polyether-modified polysiloxanes.

9. The optical article according to any of claims 1 to 8, which is a lens, preferably an ophthalmic lens.

## Patentansprüche

1. Optischer Gegenstand, umfassend

(a) ein Polycarbonat-Substrat,
(b) eine Zwischenbeschichtung, die, wenn auf ein Substrat aufgebracht, das aus einem Polymer von Diethylenglycolbis(allylcarbonat), bekannt als CR-39, besteht, um ein beschichtetes Substrat zu bilden, und dann einer Einfärbbarkeitsprüfung unterzogen, einen Transmittanzwert von wenigstens 60 % liefert,
wobei die Einfärbbarkeitsprüfung aus Eintauchen des beschichteten Substrats in eine schwarze Farbstofflösung bei 96 °C unter Atmosphärendruck über eine ausreichende Zeit, um mit einer Probe des gleichen, nichtbeschichteten Substrats unter den gleichen Bedingungen einen Transmittanzwert von 20 % zu erhalten, besteht und
(c) eine transparente selbstheilende Außenbeschichtung, erhalten durch Trocknen und Härten einer Zusammensetzung, die wenigstens ein Polycarbonatpolyol, wenigstens ein Polyisocyanat, wenigstens ein Lösungsmittel und wenigstens ein grenzflächenaktives Mittel umfasst.

2. Optischer Gegenstand gemäß Anspruch 1, **dadurch gekennzeichnet, dass** die Zwischenbeschichtung aus einem Aminoalkylalkoxysilan erhalten ist, das ausgewählt sein kann aus der Gruppe bestehend aus 3-Aminopropyltrimethoxysilan (APTMS), 3-Aminopropyltriethoxysilan (APTES), N-(2-Aminoethyl)-3-aminopropyltrimethoxysilan, N-(2-Aminoethyl)-3-aminopropyltriethoxysilan, N-(2-Aminoethyl)-3-aminopropylmethyldimethoxysilan, N-(2-Aminoethyl)-3-aminopropylmethyldiethoxysilan, N,N-Di(2-aminoethyl)-3-aminopropyltrimethoxysilan, N,N-Di(2-aminoethyl)-3-aminopropyltriethoxysilan, N-[N'-(2-Aminoethyl)-2-aminoethyl)]-3-aminopropyltrimethoxysilan, N-[N'-(2-Aminoethyl)-2-aminoethyl)]-3-aminopropyltriethoxysilan, N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, N-Cyclohexyl-3-aminopropyltrimethoxysilan, N-Cyclohexyl-3-aminopropyltriethoxysilan, N-Phenyl-3-aminopropyltrimethoxysilan, 3-Aminopropylmethyldimethoxysilan, 3-Aminopropylmethyldiethoxysilan (APDEMS), 3-Aminopropyldimethylethoxysilan (APDMES), Bis(3-trimethoxysilylpropyl)amin und Bis(3-triethoxysilylpropyl)amin, vorzugsweise 3-Aminopropyltriethoxysilan.

3. Optischer Gegenstand gemäß Anspruch 1 oder Anspruch 2, **dadurch gekennzeichnet, dass** er ferner eine abriebfeste Beschichtung aufweist, die zwischen der Zwischenbeschichtung und der Außenbeschichtung angeordnet ist, wobei die abriebfeste Beschichtung durch ein Sol-Gel-Verfahren aus wenigstens einem Epoxysilan erhalten ist.

4. Optischer Gegenstand gemäß Anspruch 3, **dadurch gekennzeichnet, dass** die abriebfeste Zwischenbeschichtung durch Härten einer Zusammensetzung erhalten ist, die durch ein Sol-Gel-Verfahren aus einem Gemisch hergestellt ist, das umfasst: (a) wenigstens ein Epoxysilan, (b) gegebenenfalls wenigstens ein Alkoxysilan, das keine reaktive funktionelle Gruppe enthält aber gegebenenfalls wenigstens eine nichthydrolysierbare organische Gruppe enthält, (c) vorzugsweise ein kolloidales anorganisches Bindemittel und (d) gegebenenfalls einen Katalysator.

5. Optischer Gegenstand gemäß Anspruch 1, **dadurch gekennzeichnet, dass** die Zwischenbeschichtung eine schlagzähe Beschichtung, bekannt als Grundierbeschichtung, ist.

6. Optischer Gegenstand gemäß Anspruch 5, **dadurch gekennzeichnet, dass** die Grundierbeschichtung auf Polyurethan basiert.

7. Optischer Gegenstand gemäß einem der Ansprüche 1 bis 6, **dadurch gekennzeichnet, dass** das Lösungsmittel ausgewählt ist aus Alkylethern von Glycolen, ihren Estern und Gemischen davon.

8. Optischer Gegenstand gemäß einem der Ansprüche 1 bis 7, **dadurch gekennzeichnet, dass** das grenzflächenaktive Mittel ausgewählt ist aus Polyether-modifizierten Polysiloxanen.

9. Optischer Gegenstand gemäß einem der Ansprüche 1 bis 8, der eine Linse, vorzugsweise eine ophthalmische Linse, ist.

## Revendications

1. Article optique comprenant :

(a) un substrat en polycarbonate,
(b) un revêtement intermédiaire qui, lorsqu’il est appliqué sur un substrat constitué d’un polymère de diéthylène glycol bis(carbonate d’allyle), connu sous le nom de CR-39, pour former un substrat revêtu, puis soumis à un essai de teintabilité, permet d’obtenir une valeur de facteur de transmission d’au moins 60 %,
l’essai de teintabilité consistant à tremper le substrat revêtu dans une solution de colorant noir à 96 °C sous la pression atmosphérique pendant suffisamment de temps pour obtenir une valeur de facteur de transmission de 20 % avec un échantillon du même substrat non revêtu dans les mêmes conditions, et
(c) un revêtement externe autocicatrisant transparent, obtenu par séchage et durcissement d’une composition comprenant au moins un polycarbonate polyol, au moins un polyisocyanate, au moins un solvant et au moins un tensioactif.

2. Article optique selon la revendication 1, **caractérisé en ce que** le revêtement intermédiaire est obtenu à partir d’un aminoalkyle alcoxysilane, qui peut être sélectionné dans le groupe constitué du 3-aminopropyltriméthoxysilane (APTMS), du 3-aminopropyltriéthoxysilane (APTES), du N-(2-aminoéthyl)-3-aminopropyltriméthoxysilane, du N-(2-aminoéthyl)-3-aminopropyltriéthoxysilane, du N-(2-aminoéthyl)-3- aminopropylméthyldiméthoxysilane, du N-(2-aminoéthyl)-3-aminopropylméthyldiéthoxysilane, du N,N-di(2-aminoéthyl)-3-aminopropyltriméthoxysilane, du N,N-di(2-aminoéthyl)- 3-aminopropyltriéthoxysilane, du N-[N’-(2-aminoéthyl)-2-aminoéthyl)]-3-aminopropyltriméthoxysilane, du N-[N’-(2-aminoéthyl)-2-aminoéthyl)]-3-aminopropyltriéthoxysilane, du N-méthyl-3-aminopropyltriméthoxysilane, du N-méthyl-3-aminopropyltriéthoxysilane, du N(n-butyl)-3-aminopropyltriméthoxysilane, du N-(n-butyl)-3-aminopropyltriéthoxysilane, du N-cyclohexyl-3-aminopropyltriméthoxysilane, du N-cyclohexyl-3-aminopropyltriéthoxysilane, du N-phényl-3-aminopropyltriméthoxysilane, du 3-aminopropylméthyldiméthoxysilane, du 3-aminopropylméthyldiéthoxysilane (APDEMS), du 3-aminopropyldiméthyléthoxysilane (APDMES), de la bis(3-triméthoxysilylpropyl)amine, et de la bis(3-triéthoxysilylpropyl)amine, préférablement le 3-aminopropyltriéthoxysilane.

**3.** Article optique selon la revendication 1 ou la revendication 2, **caractérisé en ce qu'**il comprend en outre un revêtement résistant à l'abrasion interposé entre le revêtement intermédiaire et le revêtement externe, ledit revêtement résistant à l'abrasion étant obtenu à partir d'au moins un époxysilane par un procédé sol-gel.

**4.** Article optique selon la revendication 3, **caractérisé en ce que** le revêtement intermédiaire résistant à l'abrasion est obtenu en durcissant une composition préparée par un procédé sol-gel à partir d'un mélange qui comprend : (a) au moins un époxysilane, (b) optionnellement, au moins un alcoxysilane qui ne contient aucun groupe fonctionnel réactif, mais qui contient optionnellement au moins un groupe organique non hydrolysable, (c) préférablement, un liant inorganique colloïdal, et (d) optionnellement, un catalyseur.

**5.** Article optique selon la revendication 1, **caractérisé en ce que** le revêtement intermédiaire est un revêtement résistant aux chocs, connu sous le nom de revêtement d'apprêt.

**6.** Article optique selon la revendication 5, **caractérisé en ce que** le revêtement d'apprêt est à base de polyuréthane.

**7.** Article optique selon l'une quelconque des revendications 1 à 6, **caractérisé en ce que** le solvant est sélectionné parmi des alkyléthers de glycols, leurs esters, et des mélanges de ceux-ci.

**8.** Article optique selon l'une quelconque des revendications 1 à 7, **caractérisé en ce que** le tensioactif est sélectionné parmi des polysiloxanes modifiés par des polyéthers.

**9.** Article optique selon l'une quelconque des revendications 1 à 8, lequel est une lentille, préférablement une lentille ophtalmique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2009062453 A
- US 3305520 A
- US 5316791 A
- US 4211823 A
- US 20050123771 A